# EUROPEAN PATENT APPLICATION

(11) **EP 4 180 393 A1**
(43) Date of publication of application: **17.05.2023**
(21) Application number: 21837810.7
(22) Date of filing: 09.07.2021
(51) Int. Cl.: C01B 32/19

(54) **LARGE-SCALE, ONE-STEP, ROOM-TEMPERATURE PRODUCTION OF A MATERIAL CONSISTING OF A FEW GRAPHENE FLAKES WITH A HIGH DEGREE OF DEFECTS BY HIGH-ENERGY OSCILLATORY DRY MECHANICAL MILLING**

(30) Priority: 10.07.2020 ES 202030709
(71) Applicant: Universidad Complutense de Madrid (UCM), 28040 Madrid (ES); Consejo Superior de Investigaciones Científicas (CSIC), 28006 Madrid (ES)
(72) Inventor: MARÍN PALACIOS, María Pilar, 28040 Madrid (ES); NAVARRO PALMA, Elena, 28040 Madrid (ES); LÓPEZ SÁNCHEZ, Jesús, 28040 Madrid (ES); PEÑA MORENO, Álvaro, 28040 Madrid (ES); HORRILLO GÜEMES, Mari Carmen, 28006 Madrid (ES); MATATAGUI CRUZ, Daniel, 28006 Madrid (ES)
(74) Representative: Elion IP, S.L.
(86) International application number: PCT/ES2021/070502
(87) International publication number: WO 2022/008783

(57) **Abstract**

The present invention relates to the manufacture of graphene-based materials in powder form with industrial scalability. The particles obtained are mesoporous, consist of a few layers of graphene with a high degree of defects with high chemical stability and can be used in multidisciplinary technological fields such as catalysis, selective gas sensors, and materials for absorbing electromagnetic radiation in the microwave region.

## Description

Large-scale obtention, in a single step and at room temperature, of a material composed of a few graphene sheets with a high degree of defects by means of high energy oscillatory dry mechanical grinding.

### TECHNICAL FIELD

The present invention belongs within the manufacture of graphene-based materials in powder form with industrial scalability. The particles obtained are composed of a few layers of graphene with a high degree of defects and with great chemical stability and can be used in multidisciplinary technological fields such as the catalysis, the biomedicine, the chemical sensors or as materials that are absorbing of electromagnetic radiation in the microwave region.

### BACKGROUND OF THE INVENTION

In the last years, there has been great commercial, scientific and technological interest in the production of two-dimensional materials such as graphene and graphene-based composites (also referred to as *graphene-based materials,* GBMs). These stand out mainly for their high density of charge carriers, high mechanical strength and high chemical stability [Geim, A. K., et al. (2007). The rise of graphene. Nature Materials, 6, 183-191. doi: 10.1038/nmat1849]. Therefore, there is a need to obtain these interesting materials in a reproducible manner, on a large scale and that the physical and/or chemical processes for the obtention are relatively simple and economical.

Strictly speaking, graphene is a sheet of monatomic thickness (around 0.335 nm) composed of carbon atoms joined by sp² bonds with a hexagonal crystallographic structure. At the same time, there is also bilayer graphene, trilayer graphene and a large number of different carbon allotropes such as the graphite, the carbon nanotubes or the fullerenes. All of them make up different nanostructured arrangements that display physical properties that are singular and different from one another.

The monolayer graphene has much superior properties compared to other materials. These properties are its high mobility of charge carriers, its excellent thermal conductivity and/or its high mechanical resistance. However, the development of applications is limited in some cases. On the other hand, the GBMs have properties that can adapt better to the requirements demanded by potential electronic applications. These are, for example, the bilayer graphene, to which a forbidden energy gap can be introduced by means of a barrier potential.

Delving into the family of GBMs, the stacking of a few graphene sheets (between 3 and 10 layers) and graphene nanoplatelets also stand out. These nanostructures fulfill the role of reinforcement material in composites of generally polymeric or metallic matrix, where they improve the thermal or electrical conduction properties, the mechanical properties and/or the chemical stability against the environmental degradation.

A material formed by a few sheets of graphene (also referred to as *few-layer graphene,* FLG) is composed of an ordered stack of between 3 and 10 layers of graphene according to ISO/TS 80004-13:2017(E). These nanostructured sheets are characterized by having a high specific interaction surface (higher than monolayer graphene) and have a thickness whose dimension is on the scale of a few nanometers or less. These sheets may be isolated or stacked together. The physical properties derived from the bonds between more superficial carbon atoms contained in the sheet are distinct and differ energetically from the bonds between carbon atoms that constitute the bulk material. This feature confers to the material obtained interesting structural properties and unique electronic properties. In addition, they feature a great versatility and industrial application since the FLG can be arranged in powder form. Here, the objective of the present invention is revealed: the manufacture of FLG in a homogeneous, reproducible and with industrial scaling with good structural properties, electrical properties and great chemical stability.

The state of the art related to the manufacture of FLG can be divided into two types of methods: bottom-up and top-down. Bottom-up methods, such as chemical vapor deposition or the epitaxial atomic growth layer by layer on a certain substrate, start from a material with a smaller scale than the final product. With them, high crystalline quality GBMs are obtained, but they present a high technical complexity in their manufacture, such as the growth of material in high or ultra-high vacuum hoods, or the heat treatments at high temperatures and/or long times to obtain relatively little amounts of material (grown on substrates of the order of millimeters). Therefore, these pathways do not appear to be suitable for large-scale FLG manufacturing that can meet the demand for this material in the future [Claudia Backes et al. (2020). Production and Processing of Graphene and related materials. 2D Materials 7, 022001. doi:10.1088/2053-1583/ab1e0a].

On the other hand, top-down methods generally start from graphite in massive state as raw material and seek to separate graphene sheets (or FLG) through chemical or mechanical peeling. Unlike bottom-up methods, the final product possesses a greater number of defects, but large quantities of material (several grams) are obtained with low production costs since they are generally carried out at room temperature, without using vacuum equipment and represent a great advantage for large-scale production [Claudia Backes et al. (2020). Production and processing of Graphene and related materials. 2D Materials 7, 022001. doi: 10.1088/2053- 1583/ab1e0a]

Within the peeling of graphene layers chemically, the most widely used method is the Hummers method modified of the original published in 1958 [William S. et al. (1958). Preparation of graphitic oxide. Journal of the American Chemical Society 80, 1339-1339. doi: 10.1021/ja01539a017]. With this method, large quantities of high purity material are obtained, but it has the disadvantage of involving a large number of chemical steps (some of them involve the increasing of spontaneous temperature to 100 °C). In addition, strongly reducing and oxidizing solvents and agents are used. These are potentially dangerous and pose an added difficulty for industrial-scale production.

As for the peeling of graphene layers physically, the oscillating mechanical grinding carried out in ball mills stands out. This technique effectively reduces the particle size and is commonly used in industrial processes at large scale due to its low cost, its operating temperature close to that of the environment, its simplicity of operation, and its great versatility in the manufacturing parameters (e.g. use of precursors in powder form and/or variation of frequency of oscillation to reduce the physical size of particle à la carte).

There are mechanical grinding processes by wet means (such as those described in the documents CN107973293A, CN110117006A or WO2017128929A1) where some type of solvent is used (sometimes combined with other additives), to assist the peeling process. In this case, a subsequent purification process is necessary to separate the solid phase from the solvent.

In mechanical grinding by dry means no solvents are used, although additives can be used to assist the peeling (as described, for example, in the document CN106744877A). The use of additives increases the complexity of the process, the materials used and, in some cases, can compromise the characteristics of the final product. Some additives used in mechanical grinding by dry means are: i) dry ice [Jeon, I. Y., et al. (2012). Edge-carboxylated graphene nanosheets via ball milling. PNAS 109, 5588-5593. doi:10.1073/pnas.1116897109]: (ii) fatty acids (WO 2017/105208 A1); (iii) additives based on aromatic rings (WO 2017/056086 A1). The material obtained from these investigations presents defects and/or modifications in the chemical properties. In addition, to eliminate its presence in the final product, additional processes to the manufacture of FLG may be necessary. For example, removing ammonium chloride (NH₄Cl) requires a heat treatment at 800 °C for 1 hour in the nitrogen atmosphere [D. Liu, D., et al. (2015). Scalable production of winkled and few-layered graphene sheets and their use for oil and organic solvents absorption. Physical Chemistry Chemical Physics, 19, 6913-6918. doi : 10.1039/C4CP05864J]; or instead, in the patent WO 2017/056086 A1, the processes of filtering and washing in water are carried out to obtain graphene nanoplatelets and remove added aromatic compounds.

According to the above, the methods that currently exist for large-scale manufacturing of FLG from graphite flakes by means of high-energy oscillating mechanical grinding present the disadvantage of requiring pre-treatments, heat treatments or the presence of additives or solvents, which complicate the process.

Therefore, a manufacturing method that is simple, in one step, cost-effective and applicable in large scale would be desirable.

The present invention includes a method that meets these desired characteristics by choosing a graphite precursor with flakes of a specific size and specific conditions of high-energy oscillating mechanical grinding.

### EXPLANATION OF THE INVENTION

The present invention relates to a method of high-energy oscillating mechanical grinding using as precursor monocrystalline graphite in the form of flakes of size between 2 and 50 µm and thicknesses of a few tens of nanometers. This grinding is carried out in a dry environment, at room temperature, without chemical additives nor subsequent heat treatments that allows to obtain quickly and on a large scale, a material based on FLG for its use in potential applications.

The approach developed in the present invention is based on this method of high-energy oscillating mechanical grinding and takes advantage of the laminar nature of the graphite in massive state to peel material of reduced sizes in the form of FLG. The π-πbonds formed between sheets are generally weaker than the covalent bonds coming from the carbon atoms constituting the lattice. Therefore, the material undergoes an "anisotropic" reduction in size with tendency to the peeling during the grinding. In addition, once the material is peeled, this method has a great advantage to form FLG-rich materials since these tend to be organized in the form of stacks.

In the present invention neither solvents nor chemical additives are used, which on a large scale would mean an agile and simple manufacturing process. This type of dry grinding without additives has already been used previously to obtain graphene oxide. As a novelty in this work, a precursor of monocrystalline graphite in the form of flakes is used, to which a very precise control of the energy of the grinding process must be applied, which must be between 1000 and 1500 revolutions per minute (rpm). In addition, the grinding is carried out in a metal container coated with a material that has a Knoop hardness greater than 1.000 kg/mm2.

With this approach, FLG of higher crystalline quality are obtained directly than those obtained by the other methods described above. This approach is contrary to the research carried out on this material where it is mainly sought to peel FLG with low grinding energies (<300 rpm) and low amounts of this nanostructured material are obtained [Zhu, H., et al. (2016). One-step preparation of graphene nanosheets via ball milling of graphite and the application in lithium-ion batteries. Journal of Materials Science, 51, 3675-3683. doi: 10.1007/s 10853-015-9655-z].

The material resulting from the present invention presents large number of structural defects and a strong tendency to agglomeration between nanoparticles. However, these characteristics are advantageous and this effective nanostructuring of graphite in FLG has a large number of applications, such as gas resistive sensors.

### Detailed description of the invention

The present invention details a new method of production of FLG with a high degree of defects by high-energy dry grinding without additives and at room temperature from a graphite precursor in the form of monocrystalline flakes. The material is obtained in a single step and presents easy industrial scaling. In addition, it shows physical properties that make it suitable for use as a gas-selective resistive sensor or as a material absorbing of radiation in the microwave range.

The procedure comprises the following steps:
a) The process is carried out in a ball mill of oscillating motion only from monocrystalline graphite in the form of flakes. This precursor possesses between 2 and 50 µm long and with a thickness less than 100 nm.
b) The precursor is introduced into a metal container whose interior is coated with tungsten carbide to avoid contamination and/or formation of unwanted phases.
c) A ball of tungsten carbide that meets a volume ratio to the precursor graphite powder of approximately 1:1 and to the container's container of approximately 1:50 is added.
d) The container is closed and introduced into the mill enclaves to proceed with the high-energy oscillating grinding.
e) The frequency must be comprised between 15 and 30 Hz, preferably 25 Hz. These values imply frequencies of oscillation between 1000 and 1500 rpm. The process is carried out under conditions of room temperature and ambient pressure.
f) For the obtention of homogeneous samples with a large amount of FLG, the grinding process time must be comprised between 100 and 240 minutes. Pauses of 15 to 30 minutes are included to reach the thermalization of the material and grinding equipment at room temperature and thus avoid unwanted increases in the temperature inside the jars generated by friction during the oscillating dry milling. Otherwise, it could adversely affect the process of effective FLG peeling and/or generation of unwanted secondary phases.

The samples in powder form obtained possess own structural properties of FLG. These FLGs possess between 3 and 10 layers of graphene, are not oxidized by the grinding process, have structural defects and have an electromagnetic absorption with a maximum of around 260 nm (ultraviolet region). All these properties are the basis of its application in the technological fields mentioned above.

### BRIEF DESCRIPTION OF THE DRAWINGS

To complement the description that is being made and in order to help for a better understanding of the features of the invention, accompanying as an integral part of said description, a set of drawings wherein with illustrative and non-limiting character, the following has been represented:
Figure 1 shows the crystalline structure, the morphology and the size of the graphite starting precursor in the form of flakes using TEM (Figures a and b) and SEM (Figure c) images.
Figure 2 shows the XRD patterns of the graphite precursor and its evolution as a function of grinding time from 20 minutes to 300 minutes.
Figure 3 shows TEM images for samples prepared with different grinding times: (a) 150 minutes, (b) 240 minutes, and (c) 300 minutes.
Figure 4 shows the ultraviolet-visible absorption spectra of the graphite precursor and for different grinding times between 20 and 300 minutes.
Figure 5 shows the characterization carried out by RCM: (a) Evolution of the average Raman spectra from the starting graphite to 300 minutes of grinding, (b) relationship between the amplitudes of the D and G bands, and (c) representation of the ratio of amplitudes of the D and G bands between the ratio of amplitudes of the D' and G bands. In Figure c there are indicated the regions where the own values of (i) graphite in massive state and of (ii) GBMs are obtained.
Figure 6 shows two XRD patterns of samples obtained at two frequencies of oscillation during 240 minutes of grinding. The top pattern corresponds to a sample prepared at 250 rpm and the bottom pattern corresponds to 1500 rpm.
Figure 7 shows two XRD patterns of samples obtained at a frequency of oscillation of 1500 rpm during 120 minutes of grinding taking into account one ball (bottom pattern) or two balls (top pattern) as grinding bodies.

### PREFERRED EMBODIMENT OF THE INVENTION

The present invention is illustrated by means of the following examples, which are not intended to be limiting of its scope.

### Example 1.

**This example refers to the obtention of mesoporous samples of powder composed by FLG with a high degree of defects depending on the grinding time performed at 1500 rpm (25 Hz).**

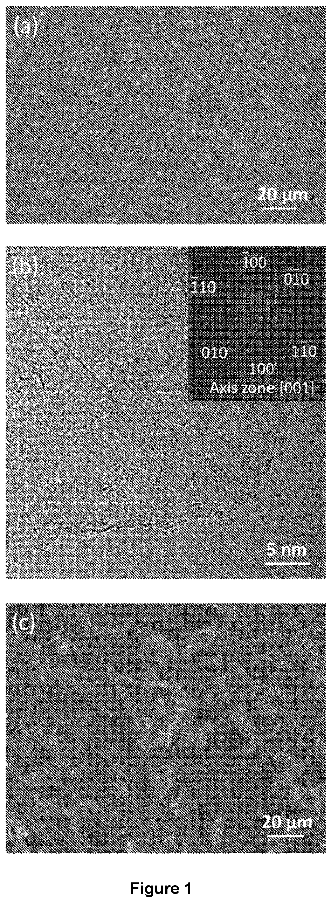

The morphology and structural properties of the starting graphite are studied by transmission electron microscopy (TEM) and scanning electron microscopy (SEM) (Figure 1). In those it can be observed that the starting graphite possesses shape of flakes and is constituted of monocrystalline particles of lateral dimension between 2 and 50 µm with a thickness less than 100 nm.

About this material, grinding is carried out in an oscillating vibratory mill (MM400, Retsch GmbH.) at 25 Hz (1500 rpm) from 20 to 300 minutes, with a metal container whose interior is coated with tungsten carbide and a ball composed of the same material. A graphite:ball mass ratio of 1:25 is established using 1 g of natural graphite in the form of flakes ("Graphite flake" by Alfa Aesar). During the grinding, interruptions are carried out every 20 minutes in order to control and help bring the temperature of the container close to room temperature.

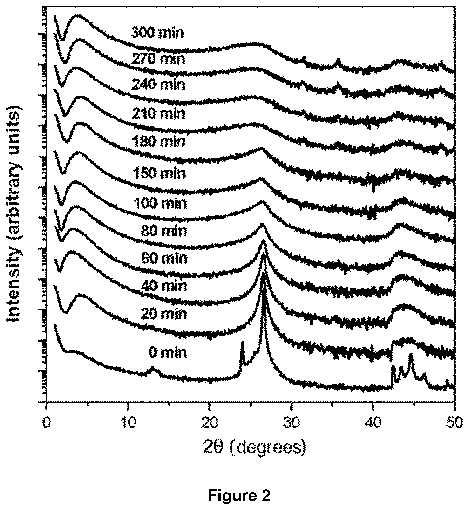

In Figure 2 there are shown the X-ray diffraction (XRD) patterns corresponding to the starting graphite and as a function of grinding from 20 to 300 minutes. In the XRD pattern corresponding to the starting graphite are observed the reflections belonging to polycrystalline graphite and an extensive maximum located between 2° and 10° characteristic of irregular mesoporous structures. As the grinding progresses, a progressive decrease in the intensity of the maximums is observed. In particular, the diffraction maximum located at 26.5° corresponds to the family of planes (002) of graphite and is related to the crystalline order in the stacking direction (Z). The lower its intensity, the lower the percentage of graphite in the massive state present in the samples. This trend, added to a shift towards lower values of 2θ, is the trace that indicates the transformation of the starting graphite in the form of flakes towards materials with structural properties similar to graphene (-24°). On the other hand, no characteristic maximum of the graphene oxide (11.5°) nor of any other oxidized compound that could devalue the physical properties of the manufactured samples is observed.

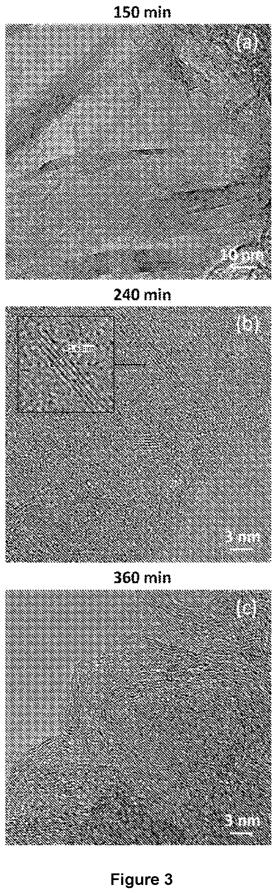

As an example of obtention of FLG, TEM images are shown for grinding times of 100, 240 and 300 minutes (Figure 3). In all the cases studied, a large amount of FLG oriented with respect to the electron beam of the microscope is observed. As the grinding time progresses, the number of layers that overlap the FLG decreases and obvious signs of agglomeration of nanostructures are observed in the case of 300 minutes. These signs of agglomeration do not imply that the structure of the FLG is destroyed.

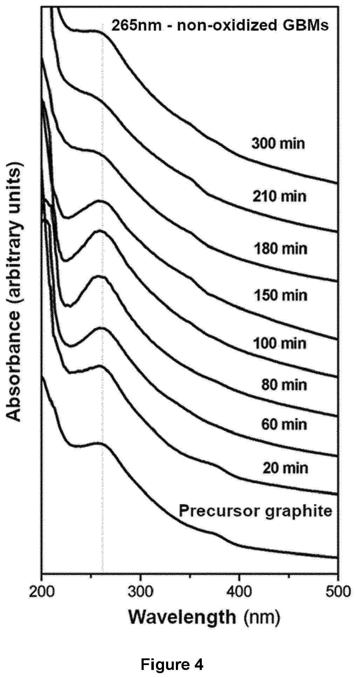

The electromagnetic absorption properties in the ultraviolet-visible range show a single absorption maximum at around 265 nm (Figure 4). This maximum is associated with characteristic excitations of graphite and graphene-based materials without oxidized products. These results support those obtained through XRD (Figure 2).

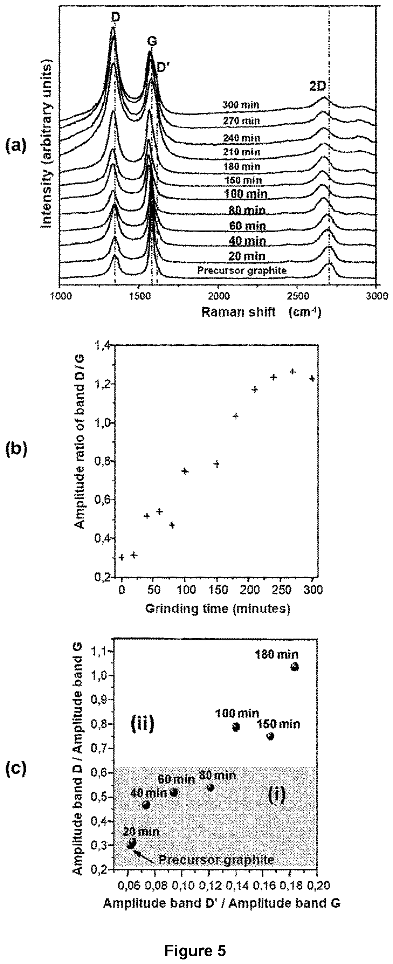

Finally, confocal Raman microscopy (RCM) is capable of discerning between different compounds of graphite and GBMs. In Figure 5a there are represented the average spectra obtained from different representative zones of the samples. The bands D, G, D' and 2D are identified. When GBMs are formed, there is a shift towards lower frequencies of the G and 2D bands. This occurs for grinding times greater than 80 minutes. From this time the samples present a high amount of FLG. In addition, the relationships between the amplitudes of the D and G bands versus the grinding time are represented. The values calculated from 80 minutes of grinding are typical of GBMs. In relation to the nature of the defects, the representation of the relationship of amplitudes between D and G as a function of the relationship of amplitudes between D 'and G, shows typical values of GBMs with some degree of sp3 hybridization at grinding times above 180 minutes. Below this value, the defects formed are preferably vacancies of carbon in the structure of the GBMs manufactured in the present invention.

This fact together with its nanostructuring makes them potentially usable in catalytic applications, chemical and/or resistive sensors and absorption of microwave (among other applications).

### Example 2

**This example refers to the obtention of FLG with a high degree of defects depending on the frequency of oscillation of the grinding time.**

The manufacturing process of the sample obtained in this application example is the same as that described in example 1, except that the frequency of oscillation used in the grinding process is 250 rpm. This example is intended to defend that for frequencies below 1500 rpm high purity GBMs are not obtained using the same grinding times, as is the case in example 1.

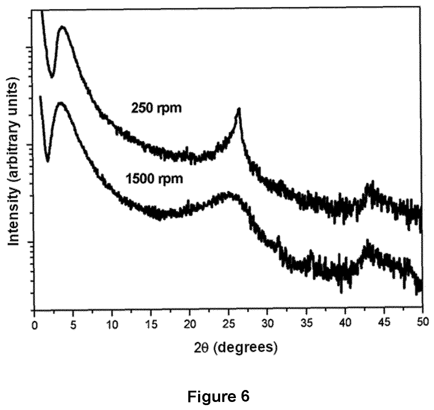

In Figure 6 there are represented the corresponding XRD at 240 minutes of grinding with frequencies of oscillation of 250 and 1500 rpm by way of example. The corresponding XRD pattern for a frequency of oscillation of 250 rpm shows characteristics of graphite of massive state with a pronounced maximum around 26.5° (Figure 6, top DRX pattern). This is accompanied by a shoulder (around 25°), attributed to graphite-based compounds with different size of crystalline domain to the starting graphite. These characteristics lead to samples with a high degree of heterogeneity when compared to the sample obtained for a frequency of 1500 rpm (Figure 6, bottom DRX pattern). The XRD pattern obtained for this last frequency of oscillation does not present characteristics of a double distribution of sizes and the complete formation of FLG is demonstrated together with the characterization provided in example 1 (Figures 2-5).

### Example 3

**This example refers to the obtention of FLG with a high degree of defects depending on the use of one or two balls during the grinding process.**

To check whether the FLG formation is effectively produced by introducing one or two balls as grinding bodies of the starting graphite, two samples are manufactured with identical grinding time of 120 minutes and frequency of oscillation of 1500 rpm. That is to say, the same conditions as those used in example 1, but with the addition of an extra ball.

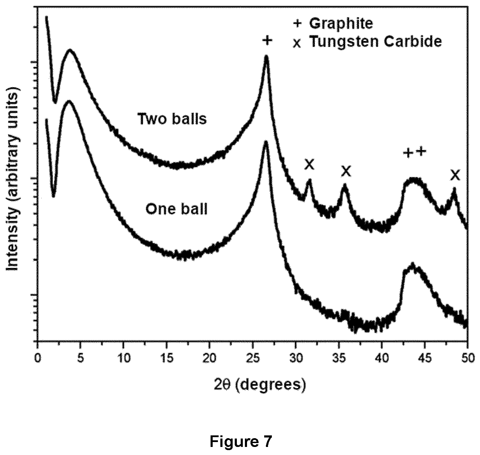

Figure 7 shows the XRD patterns obtained for one (bottom pattern) and two balls (top pattern). If the characteristic diffraction maximums of graphite (marked with "+") is taken into account, there are no major differences between the two and they possess the same degree of graphitization in the two cases. The degree of graphitization can be compared through the ratio of intensities between the reflection of the planes (002) and (101) (around 44°). This value is close to -11.1 in the two cases and, therefore, no differences exist in relation to the graphite compounds observed. However, in the case of two balls, three additional diffraction maximums marked with an "x" arise in the top pattern of Figure 7. The maximums marked as "x" correspond to tungsten carbide particles and, therefore, there is an unwanted contamination that can have an impact on any technological application mentioned in the previous sections. As a consequence, only the use of a tungsten carbide ball should be used as grinding bodies.

## Claims

1. Method of large-scale production of few-layers graphene (FLG) with high degree of defects from graphite by grinding of high-energy balls by dry oscillating motion **characterized by**:
- the precursor is graphite in the form of flakes with a length comprised between 2 and 50 µm and a thickness of less than 100 nm,
and the grinding is carried out in a metal container coated with a material possessing a *Knoop* hardness greater than 1.000 kg/mm² in presence of balls of the same material, with a frequency of oscillation between 1.000 and 1.500 rpm and a mass ratio between the ball or balls and the graphite used between 1:20 and 1:30.

2. Method of large-scale production of few-layers graphene (FLG), according to claim 1, because the grinding process is carried out at room temperature and ambient pressure, in an inert atmosphere and without additives nor subsequent processing treatments.

3. Method of large-scale production of few-layers graphene (FLG), according to claim 1, wherein the graphite flakes are monocrystalline.

4. Method of large-scale production of few-layers graphene (FLG), according to claim 1, wherein the mass ratio between the graphite and the ball or balls used is preferably 1:25.

5. Method of large-scale production of few-layers graphene (FLG), according to previous claims, wherein the material that coats the metal container and forms the balls is tungsten carbide.

6. Method of large-scale production of few-layers graphene (FLG), according to claim 5, wherein grinding is conducted with a single ball of tungsten carbide.

7. Method of large-scale production of few-layers graphene (FLG), according to claim 6, wherein the ball possesses a volume ratio between 0,8:1 and 1,2:1, preferably 1:1 with respect to the graphite used and the volume between 1:48 and 1:52, preferably 1:50 with respect to the container's container.

8. Method of large-scale production of few-layers graphene (FLG), according to previous claims, wherein the grinding time varies between 20 and 300 minutes to obtain mesoporous structures.

9. Method of large-scale production of few-layers graphene (FLG), according to claim 8, wherein the grinding time varies between 20 and 100 minutes to obtain distributions of different sizes corresponding to the starting graphite and FLG.

10. Method of large-scale production of few-layers graphene (FLG), according to claim 8, wherein the grinding time varies between 120 and 300 minutes to obtain distributions of homogeneous size corresponding to FLG.

11. Method of large-scale production of few-layers graphene (FLG), according to claim 8, wherein FLG is obtained with a thickness comprised between 3 and 10 layers of graphene according to the grinding time so that the number of layers decreases as the grinding time increases.
